# EUROPÄISCHE PATENTANMELDUNG

(11) **EP 0 874 343 A2**
(43) Veröffentlichungstag der Anmeldung: **28.10.1998**
(21) Anmeldenummer: 98106982.6
(22) Anmeldetag: 17.04.1998
(51) Int. Cl.: G08C 17/00

(54) **System zur komfortablen, mobilen Bedienung, Überwachung und zum Datenaustausch**

(30) Priorität: 23.04.1997 DE 19717089
(71) Anmelder: GEYER AG, D-90441 Nürnberg (DE)
(72) Erfinder: Schmidt, Peter, 91126 Schwabach (DE)

(57) **Zusammenfassung**

System zur komfortablen, mobilen Bedienung, Überwachung und zum Datenaustausch von direkt oder indirekt elektrisch betriebenen Funktionseinheiten im Bereich der Wohn-, Zweck- und Industriebauten, bei der die Funktionseinheiten an einer Energieversorgung angeschlossen und über ein Bussystem verbunden sind, an dem den Funktionseinheiten zugeordnete Sensoren angeschaltet sind.

## Beschreibung

Die Erfindung betrifft ein System zur komfortablen, mobilen Bedienung, Überwachuung und zum Datenaustausch von direkt oder indirekt elektrisch betriebenen Funktionseinheiten im Bereich der Wohn-, Zweck-, Industriebauten.

Durch die EP 0513443 A1 ist ein Gebäudemanagementsystem zur Verbesserung der Regelung und Überwachung unterschiedlicher Geräte für die Gebäudebetriebsfunktionen, wie Beleuchtung, Fensterrolläden und Heizung, bekannt. Die Geräte sind mittels eines Kommunikationsbuses mit dem Kontrollsystem verbunden, das die automatische Regelung und Überwachung durchführt.

Durch die EP 0753214 ist ein Steuerungssystem für die Haussteuerung bekannt zur Ansteuerung von direkt oder indirekt elektrisch betriebenen Funktionseinheiten, insbesondere von Teileinheiten eines Gebäudes, das eine Energieversorgung für die einzelnen Funktionseinheiten, eine Schalt- und Steuereinheit, die einer Funktionseinheit zugeordnet werden kann und die mit einer zentralen Steuerung eines PC-Rechners in Verbindung steht und wenigstens eine der Teileinheit zugeordnete Befehlseinheit aufweist, wobei die Befehlseinheit, die Zentralsteuerung und die Schalt-und Steuereinheiten nur in einer Datenaustauschverbindung miteinander stehen und nur die Schalt- und Steuereinheiten, die Energieversorgung oder die Funktion der Funktionseinheiten betätigen.

Weiterhin ist durch die DE 41 23 206 A1 ein System zur Übertragung von Fernsteuerbefehlen infrarotfernbedienbarer Geräte über ein Leitungsnetz, vorzugsweise über ein Stromversorgungsnetz bekannt, mit einem Empfangs- und Befehlsdecodermodul, das die Infrarotsignale einer Fernbedienung empfängt, decodiert und in einen der betätigten Befehlstaste der Fernbedienung entsprechenden Befehlscode umsetzt. Ein Netzmodulator- und Encodermodul setzt den Befehlscode des Empfangs- und Befehlsdecodermoduls in ein für die Netzübertragung kompatibles Steuersignal um und moduliert dieses auf das Leitungsnetz. Ein Netzdemodulator leitet die demodulierten und decodierten Steuersignale an ein Befehlsencoder- und Sendemodul weiter, das diese in einen der betätigten Befehlstaste der Fernbedienung entsprechenden Infrarotcode umwandelt und zur Steuerung der fernzubedienenden Geräte aussendet.

Diese bekannten Gebäudemanagementsysteme haben bei allen damit verbundenen Vorteilen den Nachteil, daß Sensor- und Informations-Systeme stationär angebracht sind. Dies gilt auch für die Nutzung des Bussystems im Industrie- und Produktionsbereich, da hier alle relevanten Maschinen- und Anlagedaten auf zusätzlich erforderlichen Anzeigetafeln an den Anlagen direkt oder bei vernetzten Anlagen auf Leitständen zur Anzeige gebracht werden müssen. In keinem Falle ist es möglich, von Funktionseinheiten Informationen zu erhalten, die sich außerhalb des körperlich direkten Zugriffs des Informationssuchenden befinden. Ebenfalls kann der Betreiber derartiger Einrichtungen keine Funktion auslösen, wenn er sich nicht im direkten Zugriffsbereich des Sensors befindet, der der Funktionseinheit zugeordnet ist.

Die Aufgabe der hier vorliegenden Erfindung ist es, diese Problemstellung zu lösen. Dabei werden Aufgabenstellungen betrachtet, die ältere und behinderte Menschen betreffen, bis hin zu Industrieanwendungen, bei denen ohne zusätzlichen Aufwand direkt oder vor Ort Informationen über die Anlage, das Aggregat oder die Einheit, ohne zusätzlichen Aufwand einer Anzeigetafel, gefordert sind. Dabei kann die vorliegende Erfindung auch erwünschten Komfort im Wohn- und Lebensbereich von Menschen bieten.

Diese Aufgabe wird erfindungsgemäß durch den kennzeichnenden Teil des Patentanspruches 1 gelöst. Vorteilhafte Ausgestaltungen sind Gegenstand der Unteransprüche.

Das erfindungsgemäße System sieht vor, bestehende Sensoren 2 (Eingabegeräte wie Schalter, Taster, Dimmer etc.) um eine Identifikationseinheit zu erweitern. Hierdurch wird es ermöglicht, den Sensor 2 zu identifizieren und auf einem geeigneten Gerät, dem Kommandogerät 1, darzustellen. Das mobile Kommandogerät 1 ist Kern des Systems. Es besteht aus einem für die menschliche Hand ergonomisch vorteilhaft geformten Gehäuse mit einem großflächigen Display 1.1 und vorzugsweise sechs, maximal acht, Bedieneinheiten, von denen vier als Pfeiltasten 1.2 ausgebildet sind. Die Elektronik des Kommandogerätes 1 ist stromsparend konzipiert und besitzt bei einem hohen Maß an Speicherkapazität eine dem Stand der Technik vergleichbare Rechnerkapazität. Sie kennt aufgrund einer über eine Datenschnittstelle ausführbaren anwenderspezifischen Programmierung alle im Bereich vorhandenen Sensoren 2. Die Organisationsstruktur der Elektronik ermöglicht die Datenablage nach dem Kriterium Raum, Bereich oder Produktionslinie usw.. Alle Textinformationen sind frei definierbar, eine Reihe von Symbolen, die die Funktionseinheiten bildlich darstellen können, stehen in der Software dem Anwender bzw. dem Programmierer zur Verfügung. So können Funktionseinheiten 6, und hier ist besonders an ältere Menschen gedacht, auch bildlich dargestellt werden. Für die drahtlose Kommunikation steht eine Funk-, und/oder Infrarot-, und/oder Ultraschall-,. und/oder andersartig geeignete elektronische Einrichtung im Gerät zur Verfügung, wobei auch zwei in der Technologie unterschiedliche Kommunikationswege möglich sind und eine drahtgebundene, nicht mobile, Ankopplung an das installierte Energie- und Bussystem 5 ebenfalls möglich ist. Ferner gehört zu dem erfindungsgemäßen System die Raum- oder Anlagenstation 4. Sie befindet sich in Form eines kleinen und gefällig geformten Sende- und Empfangskopfes, bei Wohn-, Geschäftsräumen (auch Krankenräumen etc.), über Kabel mit der zugehörigen Elektronik verbunden, in jedem Raum des Gesamtbereiches (Wohnung, Haus usw.). Bei der Installation an Maschinen, Produktionsanlagen oder ähnlichen Einrichtungen ist die Elektronik der Sende- Empfangsstation in die Anlage integrierbar. Die Elektronik der Sende- Empfangseinheit ist wiederum mit dem installierten Energie- und Bussystem 5 verbunden. Die Kommunikationsart zwischen Sensor-Identifikations-Einheit, Raum- oder Anlagenstation 4 und Kommandogerät 1 ist vollständig autark und unabhängig vom jeweilig installierten Energie- und Bussystem 5.

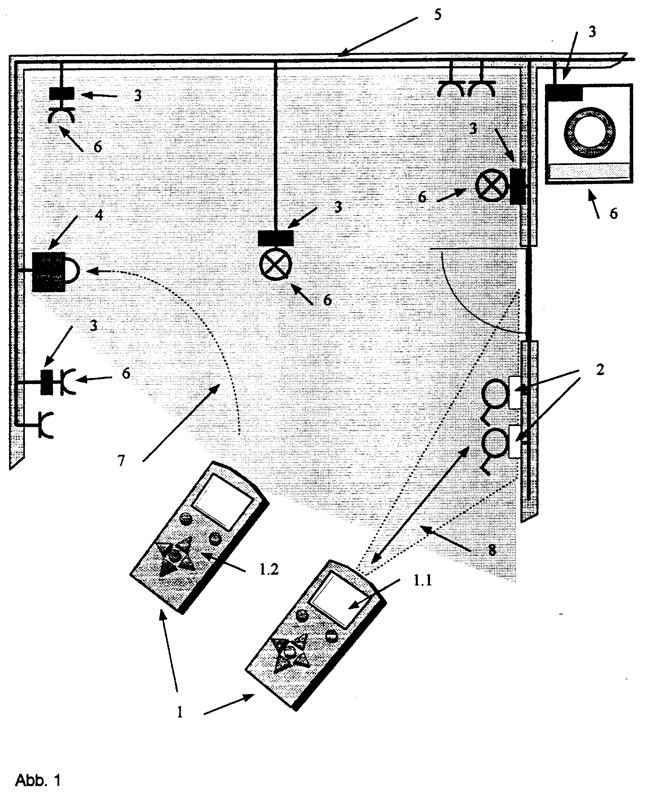

In der Abb.1 sind die Sensoren 2 und Funktionseinheiten 6 im unmittelbaren Bereich des Kommandogerätes 1 dargestellt:

Zur Identifikation wird das mobile Kommandogerät 1 auf den Sensor 2 gerichtet und über eine Taste eine Anfrage an den Sensor 2 (über Funk, Infrarot, Ultraschall etc.), also an das Zielobjekt, geschickt. Der Sensor 2 antwortet und identifiziert sich dabei, worauf das Kommandogerät 1 auf seinem Display 1.1 die Möglichkeiten des Sensors 2 mit Bezug auf seine ihm zugeordneten Funktionseinheiten 6, in Wort oder Bild, darstellt.
Der Bediener kann jetzt mit Hilfe der Pfeiltasten 1.2 die gewünschten Funktionen auslösen, ohne daß dabei das Kommandogerät 1 auf den Sensor 2 oder den Aktor 3 der Funktionseinheit 6 gerichtet sein muß.

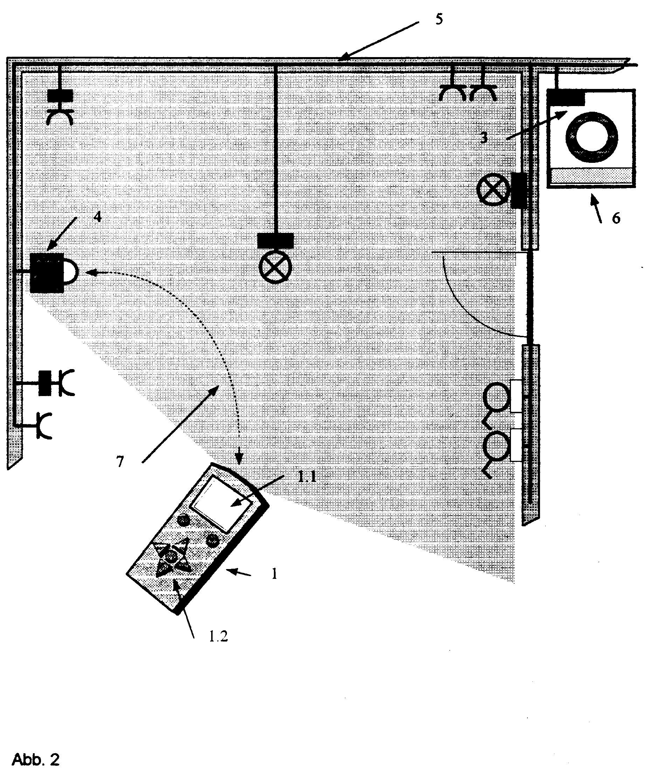

In der Abb. 2 sind die Sensoren 2 und Funktionseinheiten 6 außerhalb des unmittelbaren Bereichs des Kommandogerätes 1 dargestellt:

Der Anwender wünscht eine Information von einer Funktionseinheit 6, die sich nicht im unmittelbaren Bereich des mobilen Kommandogerätes 1 befindet, sich also nicht per gezielter Identifikation erreichen läßt.
Da sich das Kommandogerät 1 im Grundzustand in der Auswahlstellung befindet, kann der Anwender jetzt durch Betätigen der Pfeiltasten zunächst einen anderen Bereich (z.B. Waschmaschinenkeller) anwählen und findet dort die Funktionseinheit 6 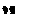 Waschmaschine".
Wird jetzt die Anfragetaste betätigt, so wird über die Raum- oder Anlagenstation 4 und über das Energie- und Bussystem 5 eine Anfrage an die Funktionseinheit 6 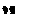 Waschmaschine" übertragen.
Mit der Rückantwort über dieselbe Kommunikationsstrecke erhält der Anwender alle relevanten Zustandsinformationen von der Funktionseinheit 6, 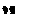 Waschmaschine (z.B. SPÜLEN, Restlaufzeit 18 min.)".

Ebenso wird die Funktionseinheit 6 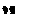 Waschmaschine" nach Abschluß des Arbeitsauftrages 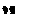 BUNTWÄSCHE, 40° C, WASCHEN" unaufgefordert über den gleichen Weg eine Fertigmeldung an das Kommandogerät 1 geben, um nur ein weiteres Beispiel aus der Vielzahl von Möglichkeiten zu geben.

Innerhalb dieses Funktionsablaufes werden beide in dieser Systematik vorhandenen Kommunikationstelegramme angewandt: Das busspezifische Telegramm, mit dem sich alle Sensoren 2 und Aktoren 3 innerhalb des Energie- und Bussystem 5 verständigen und das Kommandogeräte-Telegramm, das zwischen dem Sensor 2 und dem Kommandogerät 1 als auch zu und von der Raum- oder Anlagenstation 4 Anwendung findet.
Das erfindungsgemäße System erweitert bestehende Sensoren 2 für unterschiedliche Bussysteme um die Identifikationseinheit. Das Kommandogerät 1 ermöglicht die Ausführung der Sensorbefehlsfunktion ohne körperlich direkten Zugriff auf den Sensor 2 (Betätigen von Hand eines Schalters, Tasters, Dimmer, Blick auf das Anzeigefeld einer Waschmaschine etc.). Um das Kommandogerät 1 unabhängig von dem jeweilig installierten Energie- und Bussystem 5 und dessen Software zu machen, wird ein eigenes Datentelegramm verwendet. Die Raum- oder Anlagenstation 4 ist neben der Zugangsstelle zum jeweilig installierten Energie- und Bussystem 5 auch Telegramm-Übersetzungseinheit, d.h. vom Kommandogerät 1 kommende Befehlsanweisungen werden in der Raum- oder Anlagenstation 4 auf das jeweils erforderliche Bustelegramm übersetzt.

Zu den Funktionseinheiten 6 im Sinne der vorliegenden Erfindung gehören einerseits die allgemein zur Haustechnik und dem Wohn- und Arbeitsbereich gehörenden direkt oder indirekt elektrisch betriebenen Einheiten, im Industriebereich können dies einzeln oder vernetzte, direkt oder indirekt elektrisch betriebene Produktionsanlagen sein. Diese Funktionseinheiten 6 zeichnen sich dadurch aus, daß sie alle über eine Energieversorgung und eine Busankopplung (LON, EIB etc.) verfügen und damit einem oder mehreren Befehlseingabe-, Informationsausgabegeräten und/oder Sensoren zugeordnet sind. Die Sensoren 2 (Befehlseingabegeräte an Schalter, Taster, Dimmer, Meßgeräte etc.) umfassen alle Einheiten und Einrichtungen die, am installierten Energie- und Bussystem 5 oder nur an einem Bussystem angeschlossen, aufgrund von Bedienervorgaben oder selbsttätig erkannten Zuständen (Meßgrößen Über- oder Unterschreitung) in der Lage sind, auf Funktionseinheiten 6 einzuwirken.
Dezentrale Sensoren 2 und Funktionseinheiten 6, über ein Energie- und Bussystem 5 oder nur über ein Bussystem verbunden und einander zugeordnet, bewirken leitungssparende Installation bei höherer Flexibilität in der Zuordnung und späterer Uminstallation bei veränderten Raum- und Funktionskonzepten.

### Legende:

- 1: Kommandogerät
- 1.1: Display
- 1.2: Pfeiltasten
- 2: Identifikationseinheit
- 3: Aktor
- 4: Raum- oder Anlagenstation
- 5: Energie- und Bussystem
- 6: Funktionseinheit
- 7: Anweisungsaussendung (Ausstrahlungsbereich)
- 8: Identifikationsaussendung (Ausstrahlungsbereich)

## Patentansprüche

1. System zur komfortablen mobilen Bedienung, Überwachung und zum Datenaustausch von direkt oder indirekt elektrisch betriebenen Funktionseinheiten (6) im Bereich der Wohn-, Zweck- und Industriebauten,
dadurch gekennzeichnet,
daß die Funktionseinheiten (6) an einer Energieversorgung angeschlossen und über ein Bussystem verbunden sind, an dem den Funktionseinheiten (6) zugeordnete Sensoren, die mit Identifikationseinheiten (2) ergänzt werden, angeschaltet sind.

2. System nach dem Anspruch 1,
dadurch gekennzeichnet,
daß die Sensoren neben bekannten Busankopplern (z.B. EIB, LON, Powernet usw. ) eine, vom jeweilig installierten Bussystem getrennte und unabhängige Identifikationseinheit (2) beinhalten, die eine Mehrfacherkennung ermöglichen, ohne dabei das Bussystem zu aktivieren.

3. System nach einem der vorhergehenden Ansprüche,
dadurch gekennzeichnet,
daß ein von der Hardware und der Software des jeweilig installierten Bussystems unabhängiges Kommandogerät (1) mit der Identifikationseinheit (2) der Sensoren kommunizieren, diese erkennen, definieren und deren Funktion teilweise oder vollständig ausführen kann.

4. System nach einem der vorhergehenden Ansprüche,
dadurch gekennzeichnet,
daß eine von der Hardware und der Software des jeweilig installierten Bussystems unab-hängige Raum- oder Anlagenstation (4), die mit dem jeweilig installierten Bussystem verbunden ist, mit dem Kommandogerät (1) kommunizieren kann, Anweisungen von ihm entgegen nimmt und diese, über das jeweilig installierte Bussystem, bei den entsprechenden Funktionseinheiten (6) zur Ausführung bringt.

5. System nach einem der vorhergehenden Ansprüche,
dadurch gekennzeichnet,
daß eine von der Hardware und der Software des jeweilig installierten Bussystems unab-hängige Raum- oder Anlagenstation (4), die mit dem jeweilig installierten Bussystem verbunden ist, mit dem Kommandogerät (1) kommunizieren kann und Informationen aus dem Bussystem aufnimmt, übersetzt und an das Kommandogerät (1) übermitteln kann, die in Text und/oder Bild dargestellt werden können.

6. System nach einem der vorhergehenden Ansprüche,
dadurch gekennzeichnet,
daß ein von der Hardware und der Software des jeweilig installierten Bussystems unabhängiges Kommandogerät (1) mittels der implementierten Suchfunktion alle sich im direkten oder nicht direkten Zugriff befindlichen Funktionseinheiten (6) über die Raum-oder Anlagen-station (4) ansprechen und darauf einwirken kann.

7. System nach einem der vorhergehenden Ansprüche,
dadurch gekennzeichnet,
daß ein von der Hardware und der Software des jeweilig installierten Bussystems unabhängiges Kommandogerät (1) mittels eines von der Raum- oder Anlagenstation (4) im rhythmischen Abständen ausgestrahltes Raumkennungssignal den Raum oder Bereich erkennt, in dem es sich befindet und automatisch die in diesem Raum verfügbaren Sensorfunktionen zur Verfügung stellt.

8. System nach einem der vorhergehenden Ansprüche,
dadurch gekennzeichnet,
daß ein von der Hardware und der Software des jeweilig installierten Bussystems unabhängiges Kommandogerät (1) über eine Datenschnittstelle mit zugehörigen Software verfügt, mit deren Hilfe alle verfügbaren Funktion von Funktionseinheiten (6) deren Sensoren mit Identifikationseinheiten (2) zugeordnet sind, im Kommandogerät (1) parametriert werden können.

9. System nach einem der vorhergehenden Ansprüche,
dadurch gekennzeichnet,
daß die Sensoren unabhänig vom Komfortsystem manuell bedienbar sind.
